(19) Europäisches Patentamt
European Patent Office
Office européen des brevets

(11) **EP 2 260 540 B1**

(12) **FASCICULE DE BREVET EUROPEEN**

(45) Date de publication et mention de la délivrance du brevet:
**28.02.2018 Bulletin 2018/09**

(21) Numéro de dépôt: **09727436.9**

(22) Date de dépôt: **03.04.2009**

(51) Int Cl.:
*H01Q 3/26* (2006.01)     *G02B 6/28* (2006.01)

(86) Numéro de dépôt international:
**PCT/EP2009/054046**

(87) Numéro de publication internationale:
**WO 2009/121967 (08.10.2009 Gazette 2009/41)**

(54) **DISPOSITIF OPTIQUE POUR APPLIQUER UN RETARD VRAI A UN SIGNAL RADIOELECTRIQUE ET APPLICATION A LA FORMATION DE FAISCEAUX EN EMISSION ET EN RECEPTION AVEC UNE ANTENNE ACTIVE**

OPTISCHE VORRICHTUNG ZUR ANWENDUNG EINER ECHTZEITVERZÖGERUNG AUF EIN ELEKTRISCHES FUNKSIGNAL UND IHRE VERWENDUNG BEI DER FORMUNG VON SENDE- UND EMPFANGSSTRAHLEN MIT EINER AKTIVANTENNE

OPTICAL DEVICE FOR APPLYING A REAL DELAY TO A RADIO-ELECTRIC SIGNAL AND APPLICATION IN THE FORMATION OF TRANSMISSION AND RECEPTION BEAMS WITH AN ACTIVE ANTENNA

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.04.2008 FR 0801873**

(43) Date de publication de la demande:
**15.12.2010 Bulletin 2010/50**

(73) Titulaire: **THALES**
**92400 Courbevoie (FR)**

(72) Inventeur: **MERLET, Thomas**
**F-91410 Dourdan (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 871 297    US-A- 4 028 702**

• **DENNIS T K TONG ET AL: "Multiwavelength Optically Controlled Phased-Array Antennas" IEEE TRANSACTIONS ON MICROWAVE THEORY AND TECHNIQUES, IEEE SERVICE CENTER, PISCATAWAY, NJ, US, vol. 46, no. 1, 1 janvier 1998 (1998-01-01), XP011037091 ISSN: 0018-9480**

**EP 2 260 540 B1**

**Description**

La présente invention concerne la résolution des problèmes techniques posés par l'application de retards purs de valeurs données à des ondes électromagnétiques hyperfréquences dont la fréquence varie dans une bande de fréquences large. Elle concerne plus particulièrement l'utilisation de dispositifs optiques pour générer de tels retards. Elle s'applique notamment au domaine des antennes radars actives et à la formation de faisceaux en émission et en réception avec de telles antennes.

Les architectures optiques dédiées à la formation de faisceaux des antennes réseaux, antennes actives, ont fait l'objet de bon nombre de développements. En effet ces architectures permettent d'appliquer de manière relativement simple des retards vrais de valeur donnée aux signaux transmis en émission aux éléments rayonnants constituant une antenne active, ainsi qu'aux signaux transmis en réception par ces mêmes éléments.

Pour réaliser ces architectures, plusieurs principes optiques ont ainsi été expérimentés et sont brièvement rappelés ci-après. Cependant en l'état de l'art, aucune architecture ne semble convenir parfaitement aux besoins, notamment pour réaliser indifféremment une émission ou une réception.

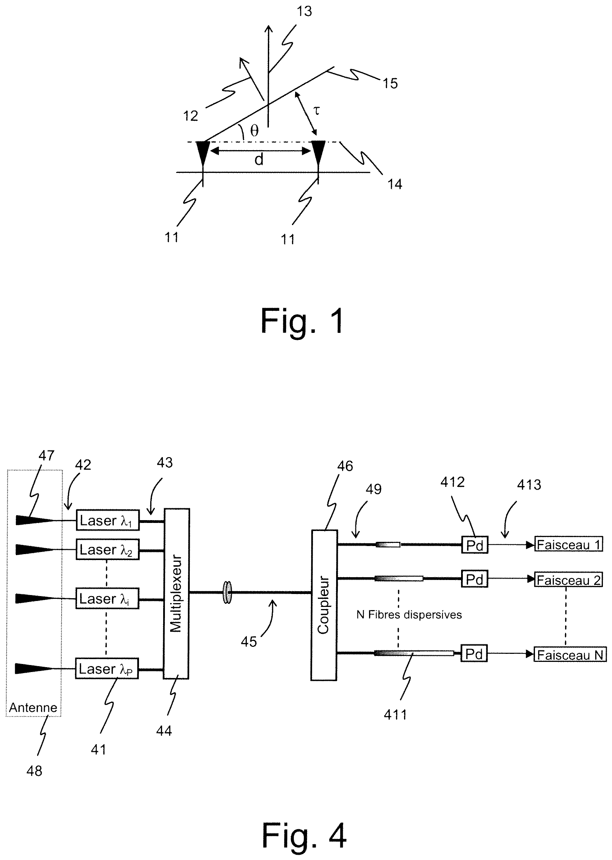

On rappelle tout d'abord qu'une antenne active, une antenne à balayage électronique en particulier, comporte une pluralité d'éléments rayonnants qui assurent à la fois l'émission et la réception des ondes hyperfréquences. Un faisceau d'émission ou de réception, orienté dans une direction donnée, est formé à partir de l'ensemble des signaux émis ou reçus par chaque élément. L'orientation d'un faisceau dans une direction donnée θ, est obtenue, comme l'illustre schématiquement la figure 1, en appliquant des retards temporels ($\tau_i$) appropriés entre les signaux émis ou reçus par les différents éléments rayonnants constituant l'antenne, ce qui a pour effet de modifier l'orientation du plan équiphase global 15 de l'antenne par rapport au plan 14 de l'antenne. Ainsi, par exemple, pour orienter le faisceau d'une antenne comportant des sources 11 espacées les unes des autres d'une distance d, dans une direction 12 donnée faisant un angle θ avec la normale 13 au plan 14 de l'antenne, il convient d'appliquer aux ondes reçues ou émises par deux sources 11 consécutives un retard $\tau$ dont la valeur est donnée par la relation $\tau = (d \cdot \sin \theta)/c$ dans laquelle c représente la vitesse de la lumière.

Une première solution connue et très utilisée pour former un faisceau dans une direction donnée, consiste à appliquer le retard voulu directement aux ondes hyperfréquences qui transitent par les sources 11. Plus exactement, pour plus de commodité de réalisation, on applique au signal reçu ou émis par chacune des sources, signal de pulsation instantanée ω, un déphasage $\varphi = \omega\tau$.

Cette solution est relativement simple à mettre en oeuvre, dans la mesure où elle nécessite simplement d'équiper chaque voie de signal, autrement dit chaque source d'un dispositif déphaseur hyperfréquence dont la réalisation est, à ce jour, bien maîtrisée et économiquement abordable. Néanmoins cette solution ne permet d'obtenir exactement le retard voulu que pour une fréquence donnée, le déphasage $\varphi$ ne correspondant au retard $\tau$ que pour la fréquence correspondant à une valeur donnée de pulsation ω. De sorte que, si elle est classiquement utilisée pour des signaux dont la bande passante instantanée reste faible c'est-à-dire limitée quelques % de la valeur de la fréquence centrale propagée ou reçue, elle n'est plus guère utilisable lorsque la bande instantanée devient conséquente et que l'étalement du faisceau par dépointage qui en résulte devient trop important. C'est pourquoi, pour des applications mettant en oeuvre des émissions à large bande instantanée telles que les radars à haute résolution, les systèmes d'imagerie radar ou encore les systèmes de guerre électronique, une commande de déphasage ne peut plus se substituer à une commande en retard vrai, commande difficilement réalisable en hyperfréquence les longueurs de lignes nécessaires étant trop importantes compte tenu de l'encombrement souhaité.

Les caractéristiques et qualités intrinsèques des transmissions optiques, comme par exemple les faibles pertes linéiques et l'encombrement plus réduit des composants mis en oeuvre, permettent d'élaborer des dispositifs capables de créer ces retards vrais. Pour ce faire, il suffit, de manière connue, de moduler une onde lumineuse porteuse avec le signal hyperfréquence émis ou reçu auquel on souhaite appliquer un retard donné, puis de faire parcourir à cette onde lumineuse un trajet correspondant au retard souhaité. Ce trajet peut par ailleurs consister en un chemin en espace libre, sur lequel sont interposés des dispositifs permettant de dévier l'onde lumineuse de façon à ce que le chemin ne soit pas nécessairement parcouru en ligne droite mais puisse au contraire être replié dans un espace de faible taille. Il peut alternativement consister en un parcours guidé au sein d'une fibre optique dont la longueur détermine le retard appliqué à l'onde. Cette deuxième façon de procéder est par ailleurs la plus utilisée car plus facilement industrialisable.

Ainsi, de manière connue, en modulant une onde lumineuse, produite par exemple par une source laser, par un signal radioélectrique, puis en formant N ondes optiques modulées identiques au moyen d'un dispositif diviseur et en appliquant à chacune des N ondes un retard propre donné, il est possible, d'obtenir, après démodulation, des signaux radioélectriques présentant des retards donnés les unes par rapport aux autres. Ces signaux peuvent être par exemple utilisés pour alimenter les sources rayonnantes d'une antenne active de façon à émettre une onde dont un plan équiphase présente avec le plan de l'antenne un angle θ donné.

Inversement, chacun des signaux reçus par les N éléments rayonnants constituant une antenne active, peut être utilisé séparément pour moduler une onde lumineuse. On forme ainsi N ondes optiques modulées, chaque onde pouvant être affectée d'un retard propre donné, permettant après démodulation de produire un signal radio électrique correspondant au signal reçu par l'antenne dans une direction θ donnée.

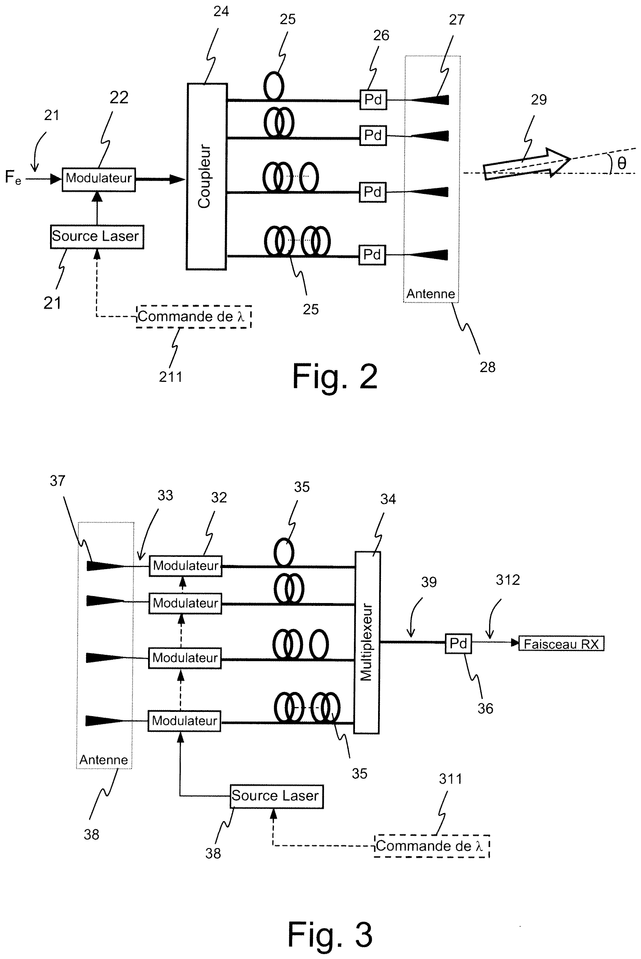

Par ailleurs, selon l'état de l'art actuel, les fibres optiques et notamment les fibres dispersives constituent le moyen le plus simple d'appliquer un retard de valeur donnée à une onde optique de longueur d'onde donnée. C'est pourquoi certains systèmes d'émission-réception radioélectriques nécessitant la formation de faisceaux directionnels en émission et/ou en réception, utilisent des moyens comportant des fibres optiques. Comme l'illustrent schématiquement les figures 2 et 3, ces systèmes emploient des structures optiques comportant une source lumineuse et des moyens pour moduler cette source avec une onde radioélectrique. L'ensemble est associé à une fibre optique permettant de retarder l'onde lumineuse modulée d'un retard τ donné. Généralement un tel ensemble est associé à chacune des sources radioélectriques constituant l'antenne du système, de sorte que le retard appliqué au signal relatif à cette source est indépendant de ceux appliqués aux signaux relatifs aux autres sources.

L'avantage de l'emploi d'une telle structure est qu'il permet de réaliser de manière simple un système d'émission ou de réception dont l'antenne présente un diagramme constitué par un faisceau pointé dans une direction faisant un angle θ avec la normale au plan de l'antenne. Plusieurs solutions connues utilisant notamment des fibres optiques dispersives permettent par ailleurs de donner à l'angle θ plusieurs valeurs distinctes, la valeur du retard affectant chaque canal étant alors déterminée de manière connue par la longueur de la fibre optique, longueur fixe qui caractérise le canal c'est à dire la position de la source rayonnante considérée dans l'antenne, et par la longueur d'onde de la source lumineuse, cette dernière pouvant être une source commandable en longueur d'onde. On forme ainsi avantageusement un faisceau de direction variable.

Une telle structure, par ailleurs performante lorsqu'il s'agit de réaliser un système d'émission ou de réception monofaisceau devient plus difficile à mettre en oeuvre lorsque l'on souhaite réaliser des systèmes multifaisceaux, capables à la fois d'émettre ou de recevoir sur une seule et même antenne active, l'émission étant par exemple réalisée suivant un faisceau unique variable et la réception suivant plusieurs faisceaux, les directions du faisceau d'émission et des faisceaux de réception étant en outre commandables séparément. L'utilisation d'une telle architecture conduit à multiplier le nombre de sources lumineuses à longueur d'onde variable (autant de sources que de faisceaux à former), ce qui a pour conséquence de complexifier l'ensemble ainsi formé et d'augmenter sensiblement son coût de fabrication.

Une solution pour résoudre partiellement ce problème et éviter un accroissement trop important du nombre d'éléments nécessaires, sources à longueur d'onde variable et dispositif de commande de longueur d'onde associé, consiste à mettre en oeuvre une structure telle que celle illustrée par la figure 3. Cette structure, basée sur l'utilisation d'une source lumineuse de longueur d'onde donnée pour chaque canal de réception, ainsi que ses avantages sont notamment décrits de manière détaillée dans la demande de brevet français déposé par la demanderesse et publiée le 09/12/2005 sous la référence FR2871297. Elle ne concerne cependant que la réception multifaisceaux et nécessite l'ajout d'une structure complémentaire pour réaliser une émission suivant un faisceau de direction variable. En outre les faisceaux formés en réception ont des directions données fixes par construction. L'article "Multiwavelength Optically Controlled Phased-Array Antennas", Dennis T. K. Tong, Ming C. Wu, IEEE Transactions on Microwave Theory and Techniques, vol. 46, no. 1, January 1998; décrit un dispositif générateur de retards selon l'art antérieur.

Un but de l'invention est de proposer une solution pour réaliser un système d'émission-réception comportant une antenne active dont l'émission puisse être réalisée suivant un faisceau de direction variable et la réception suivant plusieurs faisceaux simultanés, de directions également variables. Un autre but de l'invention est de proposer une architecture plus simple que celles proposées par les solutions existantes et donc plus facile à mettre en oeuvre et moins coûteuse. A cet effet l'invention a pour objet un dispositif générateur de retards, pour appliquer un retard de valeur donnée, quantifiée, à une onde lumineuse, la valeur du retard appliqué étant fonction de la longueur d'onde de cette onde, le dispositif comportant un ensemble de cellules génératrices de retards et de commutateurs optiques agencés de façon à former un train de cellules, reliées les unes aux autres par des commutateurs optiques, train dont les cellules d'extrémités sont reliées à des commutateurs terminaux formant les ports d'entrées/sorties de l'onde lumineuse porteuse; caractérisé en ce que chaque cellule génératrice de retards comporte trois segments de fibre optique indépendants, un segment de fibre optique dispersive à coefficient de dispersion positif, un segment de fibre optique dispersive à coefficient de dispersion négatif et un segment de fibre optique non dispersive, les trois segments ayant des longueurs identiques, chaque commutateur optiques qui relie deux cellules génératrices de retards entre elles étant configuré de telle sorte qu'en en fonction de la commande qui lui est appliquée, il relie l'un des trois segments de fibre optique constituant l'une des cellules considérées à l'un ou l'autre des trois segments de fibre optique constituant l'autre cellule. Selon l'invention, chaque commutateur optique terminal est quant à lui configuré de telle sorte qu'en fonction de la commande qui lui est appliquée, il relie un des deux segments de fibre optique constituant l'une des cellules d'extrémité à l'un des ports d'entrées/sorties du dispositif.

Selon un mode de réalisation préféré de l'invention les cellules génératrices de retards sont configurées et agencées de façon à pouvoir faire varier de manière continue le retard total appliqué à l'onde lumineuse porteuse.

Selon une variante de ce mode de réalisation préféré, les cellules génératrices de retards sont configurées pour former des retards dont les valeurs forment une progression géométrique.

Selon une variante de ce mode de réalisation, la progression géométrique est de raison 2, la valeur du retard appliqué à l'onde lumineuse porteuse faisant l'objet d'un codage binaire.

L'invention a également pour objet un système optique comportant un dispositif selon l'invention associé à une source lumineuse produisant une onde lumineuse comportant une pluralité de composantes spectrales formant un spectre de raies.

Selon une variante de réalisation du système optique selon l'invention la source lumineuse produit une onde lumineuse dont le spectre est constitué de raies régulièrement espacées.

L'invention a également pour objet un système d'émission-réception monofaisceau de signaux radioélectriques, pour émettre ou recevoir selon un faisceau dirigé dans une direction θ donnée, le système comportant un dispositif générateur de retards selon la revendication 1. L'invention a également pour objet un système d'émission-réception monofaisceau de signaux radioélectriques, pour émettre ou recevoir selon un faisceau dirigé dans une direction θ donnée, le système comportant un dispositif générateur de retards selon l'invention dans le mode de réalisation comportant des cellules génératrices de retards avec un segment de fibre optique non dispersive et un segment de fibre optique dispersive à dispersion positive et un segment de fibre optique dispersive à dispersion négative.

L'invention a également pour objet un système d'émission-réception multifaisceaux de signaux radioélectriques, pour émettre ou recevoir selon une pluralité de faisceaux dirigés dans des directions θ_j données, le système comportant une pluralité de dispositifs générateurs de retards selon l'invention.

Le dispositif selon l'invention a pour principal avantage de permettre l'application aisée d'un retard vrai à un signal radioélectrique, le retard vrai étant indépendant de la fréquence du signal radioélectrique traité.

Les caractéristiques et avantages de l'invention seront mieux appréciés grâce à la description qui suit, description qui expose l'invention au travers d'exemples non limitatifs de mise en oeuvre et qui s'appuie sur les figures annexées, figures qui représentent:

- la figure 1, une illustration du principe physique sur lequel repose la formation de faisceau;
- la figure 2, l'illustration schématique d'une structure connue permettant de former un faisceau de direction donné en émission;
- la figure 3, l'illustration schématique d'une structure connue permettant de former un faisceau de direction donné en réception;
- la figure 4, l'illustration schématique d'une structure connue, alternative à la structure illustrée par la figure 3, permettant de former une pluralité de faisceaux de directions données en réception;
- les figures 5a à 5c, des illustrations relatives à la structure et au principe de fonctionnement d'un dispositif générateur de retards connu.
- la figure 6, la représentation schématique d'un exemple de système d'émission-réception monofaisceau mettant en oeuvre une architecture optique comportant un dispositif générateur de retards connu;
- la figure 7, une illustration permettant de justifier la mise en oeuvre d'une fonction de retard invariable dans le cas de systèmes semblables dans leur fonctionnement au système de la figure 6;
- la figure 8, la représentation schématique d'un exemple de système d'émission monofaisceau et de réception multifaisceaux mettant en oeuvre une architecture optique comportant une pluralité de dispositifs générateurs de retards;
- la figure 9, la représentation schématique d'un exemple de système d'émission-réception monofaisceau mettant en oeuvre une architecture optique comportant un dispositif générateur de retards selon l'invention.

On s'intéresse tout d'abord à la figure 1, qui permet de comprendre le principe de la formation électrique d'un diagramme de rayonnement ou faisceau dans une direction donnée, en émission ou en réception, à partir d'une antenne active comportant une pluralité de sources rayonnantes disposées dans un plan.

Une antenne active, à balayage électronique, comporte une pluralité d'éléments rayonnants 11, ou sources, qui assurent à la fois l'émission et la réception d'un signal hyperfréquence. Un faisceau d'émission ou de réception, est formé en combinant les signaux émis ou reçus par les différents éléments 11. Il est connu que, avec une telle antenne, il est possible de former un faisceau dans une direction donnée 12, et donc donner à l'antenne une orientation qui permet de disposer d'un gain d'antenne maximum dans la direction considérée, sans qu'il soit nécessaire de faire tourner le plan 14 de l'antenne. En revanche, il est nécessaire de créer des retards temporels ($\tau_i$) entre les signaux émis ou reçus par les différents éléments rayonnants 11 constituant l'antenne. Ces retards temporels permettent de compenser le fait qu'en fonction de la direction considérée, les plans équiphases 15 des signaux émis ou reçus présentent une inclinaison variable θ par rapport au plan 14 de l'antenne, plan 14 par ailleurs parallèle aux plans équiphases des signaux émis ou reçus dans la direction pointée par sa normale 13.

Ainsi, si l'on considère deux sources voisines 11 distantes l'une de l'autre d'une distance d, le retard à appliquer au signal reçu ou émis par une des sources par rapport au signal reçu par l'autre source, de façon à obtenir un dépointage θ, a pour expression:

$$\tau = (d \cdot \sin \theta)/c \qquad\qquad [1]$$

Dans le domaine des fréquences radioélectriques, le retard $\tau$ est souvent difficile à réaliser du fait d la longueur électrique nécessaire pour appliquer un retard de la valeur voulue. Un effet analogue s'obtient, pour une fréquence donnée, par l'application aux signaux radioélectriques de déphasages $\varphi_i$ en lieu et place des retards $\tau i$. Néanmoins cette solution n'est exacte que pour une fréquence f donnée pour laquelle on a $\varphi_i = 2\pi f \tau_i$. Elle est cependant classiquement utilisée pour des signaux de bandes passantes instantanées faibles (quelques % par rapport à la fréquence centrale propagée) mais se heurte au phénomène d'étalement du faisceau par dépointage dès que la bande instantanée devient conséquente. Pour des applications à large bande instantanée telles que systèmes d'émission-réception des radars à haute résolution, les systèmes d'imagerie radar ou encore les systèmes de guerre électronique, cette solution n'est plus envisageable et le développement de moyens de générer des retards vrais présente un intérêt stratégique.

On s'intéresse ensuite aux figures 2 et 3 qui présentent de manière schématique des structures optiques connues permettant de contrôler l'orientation d'un faisceau radioélectrique en émission (figure 2) et en réception (figure 3).

La structure optique connue, présentée à la figure 2, comporte une source lumineuse 21 reliée à un modulateur électro-optique 22 lui-même attaqué par le signal 23 de fréquence $F_e$ à émettre. La sortie du modulateur délivre à un coupleur optique 24 une onde lumineuse de longueur d'onde $\lambda$ modulée par le signal radioélectrique à émettre. Chacune des sorties du coupleur 24 est reliée à une fibre optique 25 dont l'extrémité est elle-même reliée, par l'intermédiaire d'un élément photo-détecteur (Pd) 26 à une des sources 27 constituant l'antenne d'émission 28. Dans cette structure, la longueur de chacune des fibres optiques 25 est définie de façon à appliquer à l'onde lumineuse qui la traverse et par voie de conséquence au signal radioélectrique que celle-ci porte, un retard $\tau$ donné défini en fonction de la position sur l'antenne de la source 27 à laquelle elle est reliée et de la direction $\theta$ du faisceau suivant lequel le signal radioélectrique constitué par les signaux radioélectriques émis par chacune des sources 27 doit être émis.

Selon que le faisceau émis est un faisceau pointé dans une direction $\theta$ fixe ou variable, les fibres optiques 25 utilisées sont de natures différentes. Pour réaliser un faisceau à direction de pointage fixe, on utilise des fibres optiques 25 non dispersives associées à une source laser 21 de longueur d'onde fixe. En revanche pour réaliser un faisceau à direction de pointage variable sur commande, on utilise des fibres optiques 25 dispersives associées à une source laser 21 de longueur d'onde variable, dont la longueur d'onde est par exemple commandée par des moyens de commande 211. De la sorte, le retard subi par l'onde lumineuse traversant une fibre optique dispersive étant fonction de la longueur d'onde de cette onde, il est possible en faisant varier la longueur d'onde de la source 21 d'émettre un signal radioélectrique, suivant un faisceau unique 29, dans une direction $\theta$ variable sur commande.

La structure optique présentée à la figure 3 est une structure analogue à celle de la figure 2. Elle comporte de la même façon une source lumineuse 31 de longueur d'onde $\lambda$ et un ensemble de modulateurs électro-optiques 32. chaque modulateur est attaqué par le signal radioélectrique 33 capté par une des sources 37 constituant l'antenne 38. La sortie de chacun des modulateurs 32 délivre à une fibre optique 35 une onde lumineuse modulée par le signal radioélectrique correspondant, onde à laquelle elle applique un retard $\tau$ donné. Chaque fibre optique est reliée à une entrée d'un multiplexeur optique 34 dont la sortie 39 est démodulée par un dispositif photodétecteur 36 qui délivre un signal radioélectrique correspondant à la somme, après applications de retards donnés, des signaux radioélectriques 33 fournis par les sources 37 constituant l'antenne 38. On obtient ainsi avantageusement un signal radioélectrique global 39 correspondant à un faisceau orienté dans une direction $\theta$ déterminée par la longueur $\lambda$ de l'onde lumineuse produite par la source lumineuse 31 et par les longueurs des fibres optiques 35 associées à chacune des sources.

Comme précédemment, la direction $\theta$ du faisceau ainsi formé en réception peut être une direction fixe ou variable. Dans le premier cas, les fibres optiques 35 peuvent être des fibres non dispersives et la source 31 une source de longueur d'onde fixe. Dans le second cas, les fibres optiques sont des fibres dispersives et la source 31 une source de longueur d'onde $\lambda$ variable commandée par des moyens de commande 311.

L'utilisation de structures optiques telles que celles décrite précédemment pour générer des retards sur un signal radioélectrique, structures connues par ailleurs, s'avère particulièrement avantageuse dans nombre d'applications. En effet, Il est à noter ici que contrairement à ce qui se passe lorsqu'on utilise des dispositifs électroniques pour appliquer un retard à chacun des signaux radioélectriques qui alimentent les sources 25 constituant l'antenne ou qui sont fournis par ces sources 35, le retard appliqué est un retard vrai et non un retard résultant d'un déphasage et donc tributaire de la fréquence du signal. Par conséquent l'utilisation d'une structure optique, telle que celle schématiquement décrite ici, permet avantageusement de traiter un signal radioélectrique quelle que soit la bande passante instantanée qu'il occupe. En outre l'utilisation de fibres dispersives permet avantageusement de réaliser de manière simple un faisceau de direction variable. En revanche, l'utilisation de telles structures, s'avère moins avantageuse dès lors qu'il s'agit de réaliser simultanément plusieurs faisceaux, en particulier en réception. En effet une telle réalisation nécessite au minimum de disposer de plusieurs sources lumineuses 31 commandables séparément (en fait une par faisceau à former) pour attaquer les différents modulateurs électro-optiques 32, ainsi que des moyens de commande appropriés à la commande séparée de plusieurs sources lumineuses. De plus, outre le fait que de telles sources sont plus complexes à fabriquer que des sources de longueur d'onde fixe, la commutation d'une longueur d'onde à une autre est loin d'être instantanée, de sorte l'agilité des faisceaux formés est parfois insuffisante eut égard à l'application envisagée. Une telle structure est finalement plus adaptée à la formation simultanée de plusieurs faisceaux pointés dans des directions fixes.

On s'intéresse ensuite à la figure 4 qui présente une structure alternative connue à la structure de la figure 3, qui permet également de réaliser une réception multifaisceaux selon des faisceaux de directions données fixes.

Comme l'illustre schématiquement la figure, cette structure comporte un ensemble de sources lumineuses 41, des sources laser, de longueurs d'ondes fixes, pouvant être modulées par un signal radioélectrique 42. La structure comporte ici un nombre P de sources 41 égale au nombre d'éléments rayonnants 47 que comporte l'antenne 48. Chacune des sources lumineuses 41 est associée à un élément rayonnant 47, le signal 42 issu de chaque élément rayonnant 47 étant appliqué sur la source lumineuse correspondante.

Chacune des sources lumineuses 41 produit une onde lumineuse de longueur d'onde différente de sorte qu'à une longueur d'onde $\lambda_i$ donnée correspond un élément rayonnant déterminé. Les ondes lumineuses modulées 43 issues de chacune des sources lumineuses 41 sont appliquées sur les entrées d'un multiplexeur optique 44 à P entrées, dont la sortie produit une onde multiplexée 45 qui est appliquée à l'entrée d'un coupleur optique 46 comportant un nombre N de sorties égal au nombre de faisceaux formés. Chacune des N sorties du coupleur 46 produit une onde optique 49 identique qui est acheminée par une fibre optique dispersive 411 de longueur donnée vers un photodétecteur 412 associé à la fibre considérée. Chacune des N fibres optiques 411 étant une fibre dispersive de longueur différente, le retard appliqué aux différentes composantes 49 de l'onde optique qui la traverse dépend donc à la fois de la longueur de la fibre optique 411 considérée et de la longueur d'onde de la composante 49 considérée. Par suite chaque photo-détecteur 412 délivre un signal radio électrique 413 qui correspond à la sommes des signaux 42 fournis par chacun des éléments rayonnants 47 chaque signal 42 ayant été affecté d'un retard fonction de la position de l'élément 47 considéré dans l'antenne et de la direction $\theta$ du faisceau par lequel le signal résultant 413 est reçu. On obtient ainsi N signaux radioélectriques correspondant aux signaux reçus selon N faisceaux orientés chacun dans une direction $\theta$ fixée.

Cette structure alternative à celle illustrée par la figure 3, permet avantageusement de réaliser de manière simultanée, à partir de sources optiques simples 41, à longueur d'onde fixe, une pluralité de faisceaux en réception orientés dans des directions fixes déterminées. Toutefois cette structure plus avantageuse, connue par ailleurs, ne permet pas de réaliser de manière simple un système présentant une pluralité de faisceaux pouvant être orientés, de manière indépendante les uns des autres, dans des directions variables. Tout au plus est-il possible, à partir de ce type de structure, en utilisant des sources lumineuses commandables en longueur d'onde, de réaliser un système présentant une pluralité de faisceaux formant une grappe dans laquelle l'orientation des faisceaux les uns par rapport aux autres est fixe, la grappe pouvant seulement être orientée dans des directions variables.

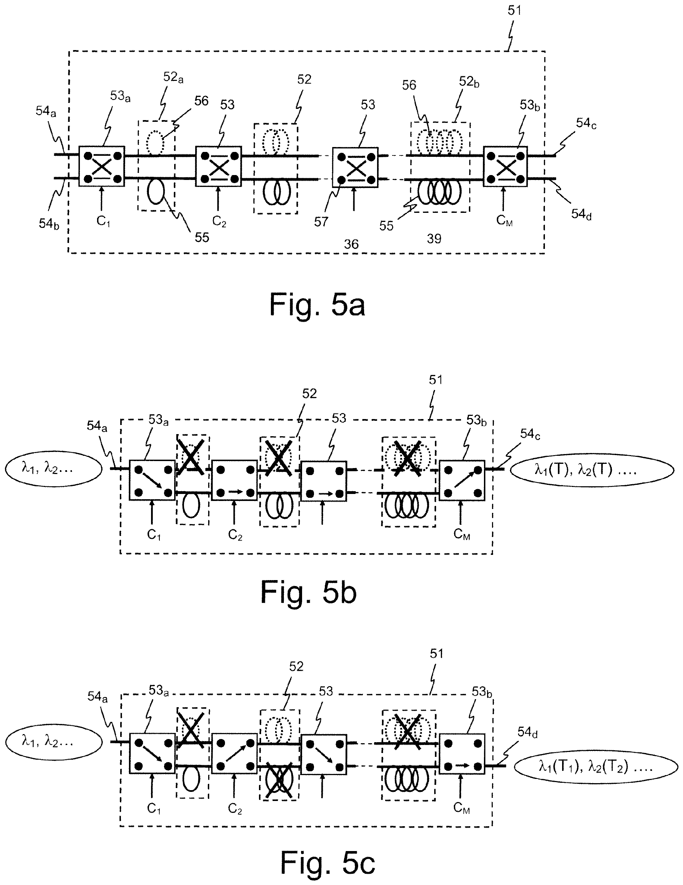

On s'intéresse à présent aux figures 5a à 5c qui présentent les caractéristiques structurelles et fonctionnelles du dispositif 51. Comme l'illustre la figure 5a, le dispositif 51 comporte un ensemble de cellules 52 génératrices de retards, ou cellules retardeuses, ainsi qu'un ensemble de commutateurs optiques 53, les cellules retardeuses 52 étant assemblées les unes aux autres par l'intermédiaire des commutateurs optiques 53 de façon à constituer un dispositif générateur de retards comportant quatre ports d'entrées/sorties 54a à 54d.

Chacune des cellules retardeuses 52 est constituée principalement par un segment de fibre optique non dispersive 55 et au moins un segment de fibre optique dispersive 56. Dans une version courante chaque cellule 52 comporte un segment de fibre optique non dispersive 55 et un seul segment de fibre optique dispersive 56. Le segment de fibre optique non dispersive 55 occasionne, de manière connue, un retard donné à l'onde lumineuse qui le traverse, retard indépendant de la longueur d'onde de cette onde. Le segment de fibre optique dispersive 56, quant à lui, occasionne à cette même onde un retard donné dépendant de la longueur d'onde de celle-ci. Plus précisément, le segment de fibre optique dispersive 56 occasionne à l'onde qui le traverse un retard proportionnel à sa longueur et à l'écart $\Delta\lambda$ de longueur d'onde existant entre la longueur d'onde $\lambda$ de l'onde considérée et la longueur d'onde nominale $\lambda_0$ caractérisant la fibre.

Les deux segments 55 et 56 constituant une même cellule 52 ne sont pas reliés entre eux et les extrémités de chaque segment forment les points de connexion de la cellule avec un élément externe, un commutateur optique 53 ou un port d'entrées/sorties 54a à 54d. Le segment de fibre optique non dispersive 55 et le segment de fibre optique dispersive 56 formant une même cellule 52, ont préférentiellement, mais pas nécessairement, des longueurs égales. Par ailleurs, la longueur des segments de fibre optique 55 et 56 est préférentiellement différente d'une cellule retardeuse à l'autre.

Ainsi, dans l'exemple d'application de la figure 5, le dispositif est constitué d'un ensemble de cellules retardeuses 52 dont les retards sont définis de façon à former une progression géométrique, de raison 2 par exemple. Le dispositif comporte ainsi M cellules retardeuses parmi lesquelles une cellule permet d'appliquer un retard minimal égal à $\tau$ et une cellule un retard maximum égal à $2^{(M-1)}\tau$. Les commutateurs optiques 53 sont des dispositifs de commutation de signaux optiques, commandables séparément au moyen d'une commande fournie par un circuit approprié, non représenté sur la figure. Chaque commutateur 53 comporte autant de pôles 57 que les cellules retardeuses 52 comportent de points de connexion. Ainsi, si le dispositif comporte des cellules retardeuses avec quatre points de connexion, les commutateurs optiques 53 intégrés au dispositif sont des commutateurs à quatre pôles. Chaque commutateur 53 est par ailleurs configuré de façon à ce que, en fonction de la commande appliquée, chacun de ses pôles puisse être connecté à n'importe lequel de ses autres pôles. Les cellules retardeuses 52 et les commutateurs optiques 53 sont agencés de façon à constituer une chaîne linéaire, un train, de cellules retardeuses, chaque cellule étant connectée en entrée et en sortie à un commutateur optique 53. On obtient ainsi une succession de cellules retardeuses 52 reliées entre elles par des commutateurs optiques 53, les commutateurs d'extrémités, ou commutateurs terminaux, 53a et 53b formant les ports d'entrées/sorties 54a à 54d du dispositif.

Chacun de pôles d'un commutateur 53 reliant entre elles deux cellules 52, est relié à un point de connexion d'une des deux cellules considérées. Autrement dit, chaque commutateur optique 53 qui relie deux cellules génératrices de retards 52 entre elles est configuré de telle sorte qu'en fonction de la commande qui lui est appliquée, il relie l'un des deux segments de fibre optique constituant l'une des cellules 52 considérées à l'un ou l'autre des deux segments de fibre optique constituant l'autre cellule.

Par ailleurs, chacun des connecteurs terminaux 53a et 53b comporte deux pôles formants deux des ports d'entrées/sorties 54a à 54d du dispositif de sorte qu'en fonction de la commande qui lui est appliquée, il relie un des deux segments de fibre optique 55 ou 56 constituant l'une des cellules d'extrémité 52a ou 52b à l'un des ports d'entrées/sorties 54a à 54d du dispositif 51.

Il est à noter que les commutateurs optiques 53 utilisés, sont de même que les cellules retardeuses 52, des dispositifs réciproques. De la sorte, le dispositif selon l'invention en lui-même est un dispositif avantageusement réciproque dans lequel les ports 54a et 54b d'une part et les ports 54c et 54d d'autre part peuvent être utilisés en entrée ou en sortie.

D'un point de vue fonctionnel, le dispositif 51 constitue un dispositif avantageusement capable d'appliquer à une onde lumineuse un retard global T pouvant varier de manière discrète, en fonction des commandes appliquées aux commutateurs 53. Ce retard peut en outre, en fonction de la nature dispersive ou non des segments de fibres optiques traversés par l'onde introduite dans le dispositif 51, être indépendant de la longueur d'onde de cette onde ou au contraire être fonction de cette longueur d'onde.

La figure 5b illustre à cet effet le cas où les commutateurs 53 sont commandés de façon à appliquer aux ondes lumineuses traversant le dispositif 51 un retard T indépendant de la longueur d'onde de l'onde considérée. On peut noter que, dans ce cas, ce sont les segments de fibre optique non dispersive 55 qui sont utilisés et dans leur totalité, de sorte que le retard appliqué est nécessairement un retard T égal à la somme des retards $\tau$ occasionnés par ces segments non dispersifs.

La figure 5c, quant à elle, illustre le cas où les commutateurs 53 sont commandés de façon à appliquer aux ondes lumineuses traversant le dispositif 51 un retard T qui dépend de la longueur d'onde de l'onde considérée. Ainsi, l'onde lumineuse traversant le dispositif selon l'invention sera affectée d'un retard $T = T_1 + T_2$, $T_1$ étant égal à la somme des retards $\tau$, indépendants de la longueur d'onde, occasionnés par les segments de fibre optique non dispersive 55 traversés par l'onde considérée et $T_2$ à la somme des retards $\tau(\lambda)$, dépendants de la longueur d'onde, occasionnés par les segments de fibre optique dispersive 56 traversés par cette même onde. Il est à noter que dans cette dernière configuration, grâce à l'utilisation des segments de fibre optique dispersive 56, une onde lumineuse constituée par une pluralité d'ondes lumineuse de longueurs d'ondes différentes multiplexées, verra chacune de ses composantes affectée d'un retard différent en fonction de la longueur d'onde de la composante considérée.

Autrement dit, en associant dans un même système le dispositif 51 à une source lumineuse émettant une onde dont le spectre est constitué de raies de longueurs d'ondes données, on obtient en sortie du système une onde lumineuse dont les composantes spectrales sont affectées de retards, le retard affectant chaque composante spectrale étant proportionnel à sa longueur d'onde. Dans le cas particulier où le spectre de l'onde produite par la source lumineuse est constitué de composantes dont les longueurs d'ondes sont régulièrement espacées les composantes spectrales de l'onde produite en sortie du système sont affectées de retards définis en fonction de la longueur d'onde par une loi en forme de rampe.

Ce résultat permet avantageusement de réaliser, grâce au dispositif 51 selon l'invention, un dispositif générateur de retards variables, commandables, permettant d'affecter différents signaux radioélectriques portés par des ondes lumineuses ayant des de longueurs d'ondes distinctes, de retards vrais distincts les uns des autres, dont les durées sont fonction de la façon dont les cellules retardeuses 52 sont agencées les unes avec les autres, l'agencement étant réalisé par simple application des commandes appropriées aux commutateurs optiques 53.

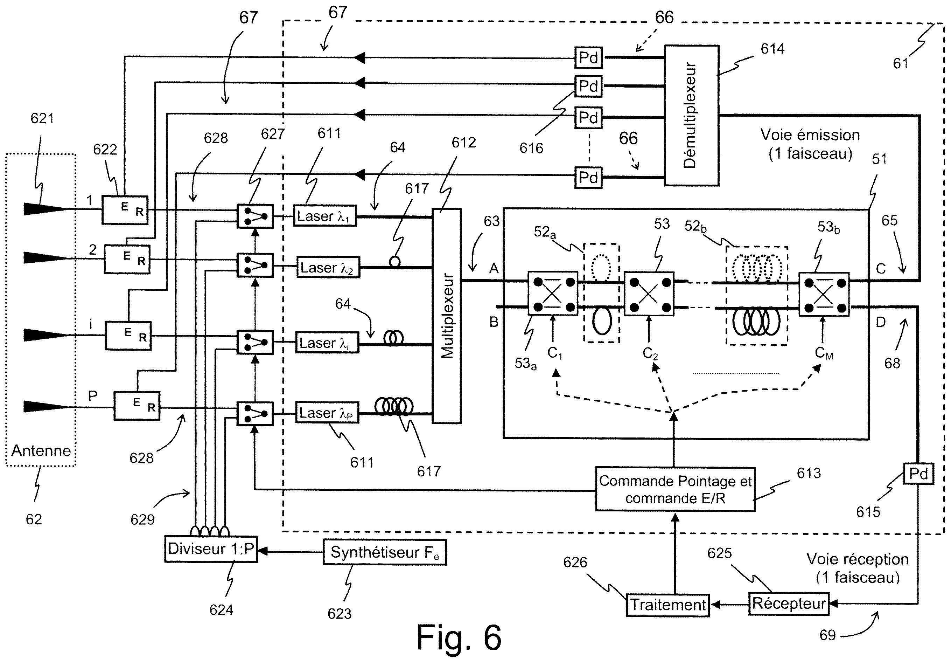

On s'intéresse à présent à la figure 6 qui présente le schéma de principe d'un premier système intégrant le dispositif 51, système présenté comme exemple d'application non limitatif. Cette application consiste en un système permettant de réaliser indifféremment une émission ou une réception radioélectrique monofaisceau à partir des signaux émis ou reçus par les P éléments rayonnants 621, ou sources rayonnantes, constituant une antenne active 62.

Pour réaliser la formation de faisceaux d'émission et de réception, le système considéré met en oeuvre une structure optique 61 permettant d'appliquer un retard vrai, de valeur donnée variable, aux signaux radioélectriques émis ou reçus par chacun des éléments rayonnants 621 constituant l'antenne 62, chaque élément constituant une voie de réception ou d'émission élémentaire. Le retard appliqué sur chacune des voies élémentaires est différent et déterminé de façon à réaliser un faisceau dont le plan équiphase fait un angle $\theta$ avec le plan de l'antenne. La valeur de l'angle $\theta$ étant déterminée par les valeurs des retards appliqués sur les différentes voies élémentaires. Cette architecture comporte principalement:

- P sources laser 611 à longueurs d'ondes fixes présentant une entrée permettant leur modulation au moyen d'un signal radioélectrique. Les longueurs d'ondes des P sources laser, toutes différentes, sont déterminées entre une longueur d'onde $\lambda_{min}$ et une longueur d'onde $\lambda_{max}$ selon une loi de variation linéaire, de sorte qu'entre deux longueurs d'ondes consécutives on ait un écart $\delta\lambda$ sensiblement constant.
- un multiplexeur de longueur d'ondes 612 à P voies produisant en sortie une onde lumineuse multiplexée 63 se présentant comme un peigne de longueurs d'ondes régulièrement espacées.
- un dispositif générateur de retards 51 dont seulement trois de ses quatre ports d'accès A, B, C et D sont connectés. Un des pôles d'un commutateur terminal 53a ou 53b est utilisé comme entrée, le pôle correspondant au port A par exemple, tandis que les deux pôles de l'autre commutateur terminal sont utilisés comme sorties, les pôles correspondant aux ports C et D dans ce cas. On réalise ainsi un dispositif à une entrée (A) et deux sorties indépendantes (C et D), une sortie, le port C par exemple étant dédiée à la voie "émission" du système, tandis que l'autre, le port D dans ce cas, est dédiée à la voie "réception".
- un circuit de commande 613 dont la fonction principale consiste à déterminer, en fonction de la direction $\theta$ dans laquelle le faisceau d'émission ou de réception doit être pointé, la valeur du retard à appliquer au signal radioélectrique émis ou reçu par chacune des P sources 621 et par conséquent la valeur du retard à appliquer à chacune des ondes optiques modulées correspondantes. Le circuit 613 produit à cet effet les commandes nécessaires pour actionner de manière appropriée les commutateurs optiques 53 qui constituent le générateur de retards 51.
- un dispositif démultiplexeur 614 à P Voies, séparateur de longueurs d'ondes, inséré dans la voie "émission" en aval du dispositif 51, dont l'entré est connectée au port de sortie dédié à la voie "émission", le port C par exemple. Le démultiplexeur 614, est chargé de séparer les P ondes lumineuses constituant l'onde lumineuse multiplexée ayant traversé le dispositif 51 et de restituer chacune des P ondes lumineuses 66 sur une sortie particulière.

Le système décrit dans cette application est conçu pour fonctionner alternativement en mode "émission" et en mode "réception". L'émission de même que la réception est ici réalisée selon un faisceau de direction $\theta$ commandable, la direction $\theta_e$ du faisceau d'émission pouvant être différente de celle $\theta_r$ du faisceau de réception. Le fonctionnement du système selon le mode considéré est décrit dans ce qui suit.

En mode émission, l'architecture optique décrite précédemment est attaquée par un signal radioélectrique $F_e$ généré par un dispositif synthétiseur de signal 623. Ce signal attaque simultanément, via un diviseur de puissance 624 les entrées de modulation des P sources lumineuses laser 611, qui produisent ainsi P ondes lumineuses 64 modulées par le signal $F_e$. Ces P ondes lumineuses sont ensuite combinées au moyen du multiplexeur optique 612 à P voies, de façon à former une onde résultante 63 ayant la forme d'un peigne de longueurs d'ondes.

La sortie du multiplexeur optique 612 est ensuite appliquée sur l'entrée d'un dispositif 51 générateur de retards dispositif dont les commutateurs optiques 53 sont commandés par l'intermédiaire du circuit de commande 613. L'onde optique multiplexée 63 parcourt ainsi les différentes cellules retardeuses 52 qui constituent le dispositif 51.

Selon la valeur de la commande $C_i$ appliquée au commutateur 53 qui précède la cellule considérée, l'onde optique multiplexée traverse chaque cellule 52 soit par un segment de fibre optique dispersive 56 soit par un segment de fibre non dispersive 55. De la sorte, en sortie du dispositif 51, les P composantes 64 de l'onde lumineuse multiplexée et retardée produite par le multiplexeur 612, se trouvent décalées temporellement, le décalage temporel $\tau$ entre deux ondes issues de deux sources laser 611 de longueurs d'ondes consécutives étant sensiblement constant. En mode "émission" l'onde lumineuse multiplexée 63 est dirigée, après avoir traversé les différentes cellules retardeuses 52, sur le port de sortie du dispositif 51 dédié à la voie "émission", le port C par exemple. A cet effet le circuit de commande 613 délivre au commutateur terminal 53b la commande appropriée.

L'onde lumineuse 65 produite par le générateur de retards 51 selon l'invention est ensuite transmise au démultiplexeur 614, chargé de séparer les P ondes lumineuses composant celle-ci et de restituer chacune des P ondes lumineuses 66 retardées sur une sortie particulière. On dispose alors de P ondes lumineuses modulées par un même signal radioélectrique présentant entre elle des retards temporels de valeur déterminée. Ces P ondes sont alors démodulées par des éléments photodétecteurs 616 qui restituent pour chaque onde lumineuse 66 le signal radioélectrique 67 porté par cette onde.

Les P signaux radioélectriques ainsi obtenus correspondent à P répliques du signal $F_e$, chaque réplique étant affectée d'un retard propre correspondant au retard appliqué par le dispositif 51 à l'onde lumineuse ayant porté cette réplique. Le retard affectant chacun des P signaux 67 est par ailleurs un multiple d'un retard unitaire $\tau$ égal au retard minimal pouvant séparer deux des P ondes lumineuses produites par les P sources laser 611, après leur passage à travers le dispositif générateur de retards 51.

Chacun des P signaux radioélectriques obtenus est finalement appliqué, via un dispositif 622 de couplage directif de type circulateur, à l'élément rayonnant 621 auquel il correspond de par son retard.

Par suite la combinaison au niveau de l'antenne de ces signaux radioélectriques affectés des retards appropriés, retard qui sont ici avantageusement des retards vrais et non des retards produits par application de déphasages, permet de réaliser l'émission d'un signal à large bande passante instantanée selon un faisceau pointé dans une direction unique θ donnée.

En mode réception, l'architecture optique décrite précédemment est attaquée par les P signaux radioélectriques captés par les éléments rayonnant 621 constituant l'antenne 62. Chaque signal est appliqué à la commande de modulation d'une des P sources lumineuses laser 611, qui produit ainsi une onde lumineuse modulée par le signal considéré. Les P ondes lumineuses modulées 64 ainsi produites sont ensuite multiplexées et l'onde lumineuse résultante 63 est ensuite appliquée au dispositif générateur de retards 51 de sorte que, comme dans le mode émission, chacune des ondes 64 composant l'onde multiplexée subit un retard qui est fonction de la longueur d'onde de cette onde et des commandes appliquées aux commutateurs optiques constituant le dispositif 51.

A sa sortie du dispositif 51, l'onde lumineuse multiplexée 63 est dirigée, après avoir traversé les différentes cellules retardeuses 52, vers le port de sortie dédié à la voie "réception", le port D par exemple. A cet effet le circuit de commande 613 délivre au commutateur terminal 53b la commande appropriée. L'onde lumineuse 68 subit alors une démodulation au travers d'un élément photodétecteur 615 et le signal radioélectrique résultant 69, qui représente la somme des signaux radioélectriques portés par les P ondes lumineuses constituant l'onde multiplexée 68 et affecté des retards correspondants, est exploité après réception 625 par les moyens de traitement 626 du système. Le traitement appliqué permet de former, de manière conventionnelle, un faisceau de réception selon la direction définie par les retards appliqués aux signaux reçus par les différentes sources 621 constituant l'antenne 62.

Ainsi que l'on peut le constater au travers de cette première application, l'utilisation d'un dispositif générateur de retards 51 permet donc avantageusement de réaliser des structures optiques 61 pouvant être intégrées dans un système d'émission réception à antenne active comportant des sources rayonnantes, de façon à de rendre ce système capable de réaliser indifféremment une émission ou une réception large bande suivant un faisceau de direction θ variable et commandable de manière simple.

Il est à noter ici que, comme chaque source lumineuse laser 611 ne comporte généralement qu'une seule commande de modulation l'entrée correspondante de chaque source lumineuse 611 est associée à un commutateur 627 commandé par le circuit de commande 613. Ce commutateur permet de raccorder à la commande de modulation de chacune des sources lumineuses laser 611, en fonction du mode de fonctionnement considéré, soit le signal radioélectrique 628 issu de la source 621 correspondante (Mode réception), soit le signal radioélectrique 629 réplique du signal $F_e$ (mode émission).

Il est également à noter que, dans l'application considérée, le dispositif générateur de retards 51 utilisé est un dispositif dans lequel chaque cellule retardeuse comporte seulement deux segments de fibre optique, un segment de fibre optique non dispersive 55 et un segment de fibre optique dispersive 56 ce segment étant un segment de fibre dispersive à dispersion positive ou négative. On rappelle ici que le signe de la dispersion caractérise, de manière connue, le fait que pour la fibre optique considérée, le retard appliqué à une onde lumineuse qui la traverse croît (dispersion positive) ou décroît (dispersion négative) en fonction de la longueur d'onde de cette onde.

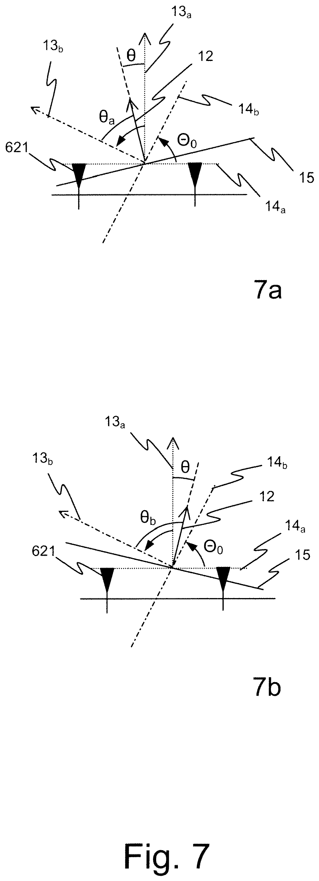

Dans cette configuration, le dispositif 51 n'est donc en mesure de d'appliquer qu'un retard croissant ou décroissant en fonction de la longueur d'onde aux ondes qui le traversent. Ceci a pour résultat connu que la direction θ du faisceau ainsi formé ne peut varier que dans un seul sens par rapport à la direction de pointage nominale correspondant à la normale au plan de l'antenne. C'est pourquoi, dans cette première application, l'utilisation du dispositif générateur de retard dans cette forme nécessite généralement, comme l'illustre la figure 7 la réalisation d'un retard préalable constant qui permet d'appliquer un offset angulaire $\Theta_0$ à la direction de pointage du faisceau de l'antenne. Cet offset a pour effet de modifier la direction de pointage nominale d'une direction 13a perpendiculaire au plan 14 de l'antenne vers une direction 13b faisant un angle $\Theta_0$ avec 13a. Cet offset est obtenu en affectant à chacun des éléments rayonnants de l'antenne un retard identique $T_0$.

De la sorte, la direction θ, dans laquelle un faisceau formé est dirigé, est référencée à partir de cette direction $\Theta_0$ de dépointage préalable en suivant un sens de rotation unique (constant) par rapport à la direction 13b du faisceau nominal affecté de l'offset $\Theta_0$. Les figures 7a et 7b illustrent respectivement les effets de la mise en oeuvre de cette correction pour la réalisation d'un faisceau 12 faisant un angle θ compté positivement par rapport à la direction de pointage nominale initiale 13a et pour la réalisation d'un faisceau 12 faisant un angle θ compté négativement par rapport à cette même direction.

On constate ainsi qu'en appliquant un retard constant $\Theta_0$ et en référençant la direction θ du faisceau à former par rapport à la direction 13b on peut repérer n'importe quel faisceau par un angle $\theta_a$ ou $\theta_b$ compté de manière invariante, positivement ou négativement, pour toutes les directions pointées. Par suite les retards correspondants à appliquer aux signaux radioélectriques émis ou reçus par les éléments rayonnants 621 de l'antenne, peuvent être réalisés en utilisant un seul type de fibre optique dispersive 56, une fibre à dispersion négative ou une fibre à dispersion positive selon les cas.

Cet Offset angulaire peut être réalisé de manière simple, comme l'illustre la figure 6 en insérant dans chacune des voies optiques qui véhiculent vers le multiplexeur optique 612 les ondes lumineuses 64 produites par les sources lumineuses 611, des segments de fibre optique 617 de longueurs appropriées. Les longueurs de ces segments de fibre optique non dispersive 617 sont définis de manière connue de façon à induire sur les ondes optiques 63 produites par les P sources lumineuses 611, et donc sur les signaux radioélectriques portés par ces ondes, des retards qui, en l'absence de tout retard différentiel appliqué par le dispositif 51, conduisent à la formation d'un faisceau dont la direction $13_b$ est dépointée d'un angle $\Theta_0$ par rapport à la direction initiale $13_a$ correspondant à la normale au plan 15 de l'antenne 62. On effectue ainsi une préorientation de la direction de pointage du faisceau.

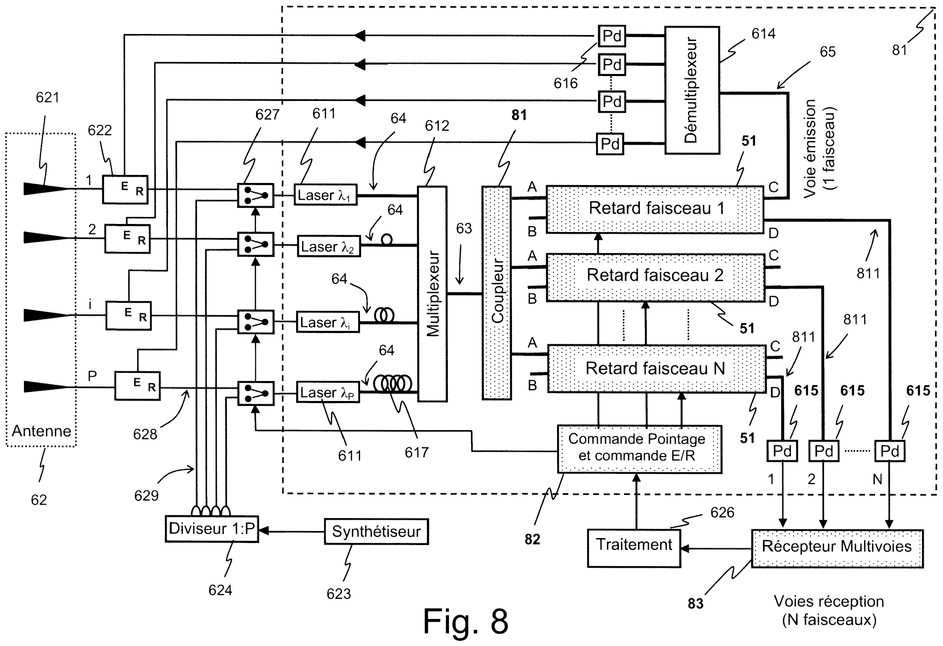

On s'intéresse ensuite à la figure 8 qui présente le schéma de principe d'un second système intégrant le dispositif 51, système également présenté comme exemple d'application non limitatif. Cette application déduite de l'application précédente consiste en un système permettant de réaliser une émission radioélectrique monofaisceau ou une réception radioélectrique multifaisceaux à partir des signaux émis ou reçus par les P éléments rayonnants 621, ou sources rayonnantes, constituant une antenne active 62 Le système considéré met en oeuvre une structure optique 81 similaire à celle décrite

Comme on peut le constater sur la figure, cette structure 81 se distingue de la structure 61 en ce qu'elle intègre non plus un dispositif générateur de retards 51 unique, mais un ensemble de N générateurs de retards 51 fonctionnant de manière indépendante pour former N faisceaux en réception. Dans cette application, chaque générateur de retards 51 reçoit une onde lumineuse identique délivrée par un coupleur optique 81 à partir de l'onde lumineuse multiplexée 63 fournie par le multiplexeur 612. En outre, un générateur de retards 51 particulier est dédié à la formation du faisceau d'émission, tandis que les N-1 autres dispositifs 51 sont exclusivement utilisés à la formation de faisceau en réception, le seul port de sortie dédié à la voie "réception" considérée, le port D par exemple, étant alors utilisé.

Dans cette application, le signal radioélectrique, obtenu sur chaque voie de réception après démodulation de l'onde lumineuse correspondante 811 fournie par le dispositif générateur de retards 51 associé, est ensuite traité séparément des autres de sorte que l'on dispose en sortie du récepteur multivoies 83 de signaux indépendants correspondant chacun à un faisceau dont la direction peut être fixée indépendamment de celle des autres faisceaux formés. A cet effet le circuit de commande 82, dont les fonctions sont similaires à celles du circuit de commande 613 de l'application précédente, est néanmoins dimensionné de façon à produire les commandes nécessaires à la mise en oeuvre des N dispositifs générateurs de retards 51 que renferme la structure optique 81.

En matière de modes de fonctionnement, cette seconde application ne présente aucune différence par rapport à l'application précédente, si ce n'est qu'en mode réception le système permet avantageusement, par la simple mise en oeuvre simultanée de plusieurs dispositifs 51 selon l'invention, de former simultanément une pluralité de faisceaux indépendants.

Cette seconde application met en évidence le caractère particulièrement avantageux du dispositif, dispositif qui permet de réaliser une structure optique simple, générique et, selon le degré de sophistication souhaité, un système de formation de voies pour une émission monofaisceau et une réception mono ou multifaisceaux, le nombre de faisceaux pouvant être formés dépendant principalement du nombre de dispositifs générateurs de retards 51 intégrés à cette structure optique 81.

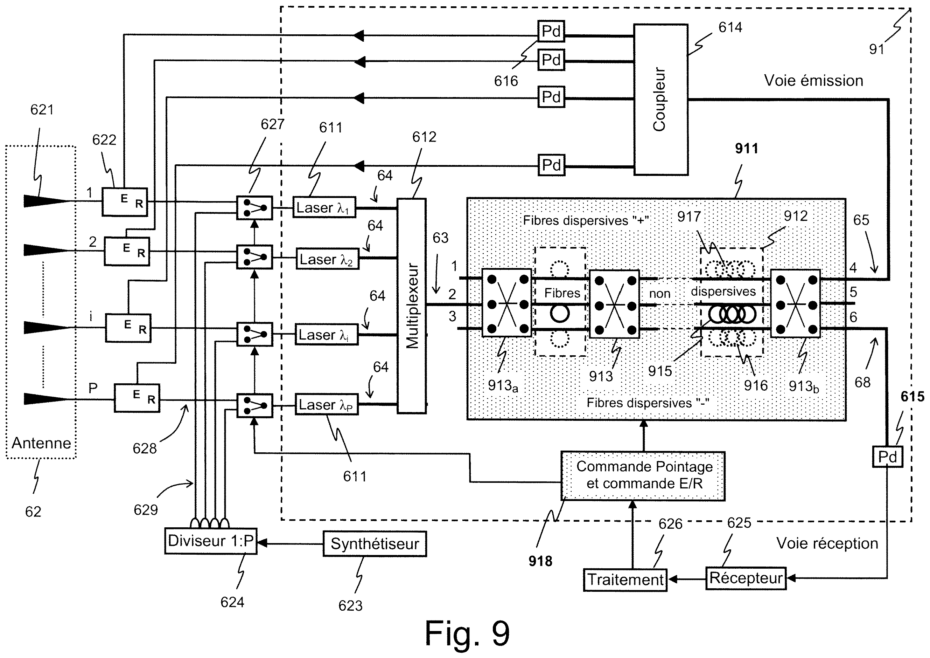

On s'intéresse enfin à la figure 9 qui présente le schéma de principe d'un système intégrant le dispositif 51 générateur de retards selon l'invention, système présenté également comme exemple d'application non limitatif. Cette application, comme celle illustrée par la figure 6, consiste en un système permettant de réaliser une émission ou une réception radioélectrique monofaisceau à partir des signaux émis ou reçus par les P éléments rayonnants 621, ou sources rayonnantes, constituant une antenne active 62.

Comme dans le cas d'application de la figure 6 le système présenté comporte une structure optique 91 permettant d'appliquer un retard vrai sur chacun des signaux radioélectriques délivrés par les éléments rayonnants 621 constituant l'antenne 62 du système (réception) ou appliqués sur ces éléments (émission), chaque source 621 constituant une voie de réception ou d'émission élémentaire. Comme précédemment également, le retard appliqué sur chacune des voies élémentaires est différent et déterminé de façon à réaliser un faisceau dont le plan équiphase fait un angle $\theta$ donné avec le plan de l'antenne 15. La valeur de l'angle $\theta$ est déterminée par les valeurs des retards appliqués sur les différentes voies.

En revanche l'architecture de la structure optique 91, mise en oeuvre dans cette application, diffère quelque peu de celle de la structure 61 illustrée par la figure 6, en ce qu'elle comporte une variante de réalisation 911 du dispositif générateur de retards selon l'invention.

Dans cette variante de réalisation 911, dont la structure et le principe de fonctionnement sont sensiblement les mêmes que ceux de la variante 51, plus simple, décrite précédemment, le dispositif selon l'invention est constitué de cellules retardeuses 912 comportant non plus deux, mais trois segments de fibre optique; un segment 915 de fibre optique non dispersive, un segment 916 de fibre optique à dispersion négative et un segment 917 de fibre optique à dispersion positive. De la sorte, cette variante de réalisation, le dispositif générateur de retards selon l'invention se trouve capable d'appliquer à une onde lumineuse résultant du multiplexage d'ondes lumineuses de longueurs d'ondes différentes une loi de retard, une loi linéaire par exemple, dont la variation en fonction de la longueur d'onde est soit positive, soit négative.

Par suite la structure optique réalisée à partir du générateur de retards 911 permet de former, en émission ou en réception, un faisceau dont les plans équiphases présentent avec le plan de l'antenne un angle aigu ($\theta_a$ sur la figure 7a) ou obtus ($\theta_b$ sur la figure 7b). Autrement dit, elle permet de former un faisceau pointé dans une direction 12 qui fait avec la normale $13_a$ au plan de l'antenne un angle $\theta$ positif ou négatif, c'est à dire correspondant à une rotation de cette normale dans le sens horaire ou dans le sens trigonométrique.

L'utilisation de cette variante de réalisation du dispositif selon l'invention permet avantageusement de s'affranchir de la nécessité d'appliquer comme dans l'application de la figure 6 un biais constant de pointage $\Theta_0$, biais systématique qui peut avoir pour conséquence d'altérer les caractéristiques générales du diagramme d'antenne et donc des faisceaux constitués. L'utilisation de liaisons optiques de différentes longueurs entre les sources lumineuses et le multiplexeur optique n'est donc plus nécessaire et l'on peut ainsi avantageusement utiliser des segments de liaison 92 d'une longueur identique, de préférence la plus courte possible. Cependant, elle nécessite la mise en oeuvre d'une variante 911 du dispositif selon l'invention un peu plus complexe et donc d'une réalisation un peu plus coûteuse en particulier du fait que les commutateurs optiques 913 utilisés comportent non plus quatre mais six pôles. Aucune des deux solutions alternatives présentées dans ces deux applications ne rend donc l'autre inconditionnellement obsolète.

## Revendications

1. Dispositif (911) générateur de retards, pour appliquer un retard de valeur donnée, quantifiée, à une onde lumineuse (63), la valeur du retard appliqué étant fonction de la longueur d'onde de cette onde, le dispositif comportant un ensemble de cellules génératrices de retards (912) et de commutateurs optiques (913) agencés de façon à former un train de cellules, reliées les unes aux autres par des commutateurs optiques, train dont les cellules d'extrémités sont reliées à des commutateurs terminaux (913a, 913b) formant les ports d'entrées/sorties (1 à 6) de l'onde lumineuse porteuse (63); **caractérisé en ce que** chaque cellule génératrice de retards (912) comporte trois segments de fibre optique indépendants, un segment de fibre optique dispersive (917) à coefficient de dispersion positif, un segment de fibre optique dispersive (916) à coefficient de dispersion négatif et un segment de fibre optique non dispersive (915), les trois segments ayant des longueurs identiques, chaque commutateur optiques (913) qui relie deux cellules génératrices de retards (912) entre elles étant configuré de telle sorte qu'en en fonction de la commande qui lui est appliquée, il relie l'un des trois segments de fibre optique constituant l'une des cellules (912) considérées à l'un ou l'autre des trois segments de fibre optique constituant l'autre cellule.

2. Dispositif selon la revendication 1, **caractérisé en ce que** chaque commutateur optique terminal (913a, 913b) est configuré de telle sorte qu'en fonction de la commande qui lui est appliquée, il relie un des trois segments de fibre optique (915, 916, 917) constituant l'une des cellules d'extrémité à l'un des ports d'entrées/sorties (1 à 6) du dispositif (911).

3. Dispositif selon l'une des revendications 1 ou 2, **caractérisé en ce que** les cellules génératrices de retards (912) sont configurées et agencées de façon à pouvoir faire varier de manière continue le retard total appliqué à l'onde lumineuse porteuse (63).

4. Dispositif selon la revendication 3, **caractérisé en ce que** les cellules génératrices de retards (912) sont configurées pour former des retards dont les valeurs forment une progression géométrique.

5. Dispositif selon la revendication 4, **caractérisé en ce que** la progression géométrique est de raison 2, la valeur du retard appliqué à l'onde lumineuse porteuse faisant l'objet d'un codage binaire.

6. Système optique comportant un dispositif (911) selon l'une quelconque des revendications 1 à 5, associé à une source lumineuse produisant une onde lumineuse (63) comportant une pluralité de composantes spectrales formant un spectre de raies.

7. Système optique selon la revendication 6, **caractérisé en ce que** la source lumineuse produit une onde lumineuse (63) dont le spectre est constitué de raies régulièrement espacées.

8. Système d'émission-réception monofaisceau de signaux radioélectriques, pour émettre ou recevoir selon un faisceau dirigé dans une direction $\theta$ donnée, **caractérisé en ce qu'**il comporte:

- une antenne (62) avec une pluralité de sources radioélectriques (621);
- une pluralité de sources lumineuses (611) en nombre égal au nombre de sources radioélectriques (621), chacune des sources lumineuses étant associée à une source radioélectrique et produisant une onde lumineuse (64) ayant une longueur d'onde propre $\lambda_i$, modulée par un signal radioélectrique (628, 629) appliqué sur une entrée de modulation;
- un multiplexeur d'ondes lumineuses (612) produisant une onde lumineuse (63) combinant les ondes lumineuses (64) produites par lesdites sources lumineuses (611), chacune des ondes lumineuses (64) étant directement appliquée sur une entrée du multiplexeur;
- un dispositif générateur de retards (911) selon l'une quelconque des revendications 1 à 5 dont l'entrée (2) est reliée à la sortie du multiplexeur (612);

la longueur d'onde $\lambda_i$ de chacune des sources lumineuses (611) étant déterminée en fonction de la source radioélectrique (621) à laquelle elle est associée de façon obtenir pour chacune des sources, après démodulation de l'onde lumineuse (65, 68) fournie par le dispositif générateur de retards (911), un signal radio électrique égal au signal radioélectrique (628, 629) appliqué à l'entrée de modulation de la source lumineuse affecté d'un retard donné; défini de façon à ce que la combinaison des signaux radioélectriques ainsi obtenus constitue le signal émis ou reçu dans la direction de pointage θ du faisceau considéré.

9. Système d'émission-réception multifaisceaux de signaux radioélectriques, pour émettre ou recevoir selon une pluralité de faisceaux dirigés dans des directions θj données, **caractérisé en ce qu'**il comporte:

- une antenne (62) avec une pluralité de sources radioélectriques (621);
- une pluralité de sources lumineuses (611) en nombre égal au nombre de sources radioélectriques (621), chacune des sources lumineuses étant associée à une source radioélectrique et produisant une onde lumineuse (64) ayant une longueur d'onde propre $\lambda_i$ modulée par un signal radioélectrique (628, 629) appliqué sur une entrée de modulation;
- un multiplexeur d'ondes lumineuses (612) produisant une onde lumineuse (63) combinant les ondes lumineuses (64) produites par lesdites sources lumineuses (611);
- une pluralité de dispositifs générateurs de retards (911) selon l'une quelconque des revendications 1 à 5, le nombre de dispositifs générateurs de retards étant égal au nombre de faisceaux à former l'entrée (A) de chaque dispositif générateur de retards étant relié à une sortie d'un coupleur optique (81) dont l'entrée est reliée à la sortie du multiplexeur d'ondes lumineuses (612);

la longueur d'onde $\lambda_i$ de chacune des sources lumineuses (611) étant déterminée en fonction de la source radioélectrique (621) à laquelle elle est associée de façon obtenir pour chacune des sources, après démodulation de l'onde lumineuse (65, 811) fournie par chaque dispositif générateur de retards (911), une pluralité de signaux radioélectriques, chaque signal étant égal au signal radioélectrique (628, 629) appliqué à l'entrée de modulation de la source lumineuse affecté d'un retard donné; défini de façon à ce que la combinaison des signaux radioélectriques ainsi obtenus constitue le signal émis ou reçu dans une des directions de pointage θ de faisceaux considérées.

10. Système d'émission-réception monofaisceau de signaux radioélectriques, pour émettre ou recevoir selon un faisceau dirigé dans une direction θ donnée, **caractérisé en ce qu'**il comporte:

- une antenne (62) avec une pluralité de sources radioélectriques (621);
- une pluralité de sources lumineuses (611) en nombre égal au nombre de sources radioélectriques (621), chacune des sources lumineuses étant associée à une source radioélectrique et produisant une onde lumineuse (64) ayant une longueur d'onde propre $\lambda_i$ modulée par un signal radioélectrique (628, 629) appliqué sur une entrée de modulation;
- un multiplexeur d'ondes lumineuses (612) produisant une onde lumineuse (63) combinant les ondes lumineuses (64) produites par lesdites sources lumineuses (611) chacune des ondes lumineuses étant véhiculée vers une entrée du multiplexeur par un segment de fibre optique non dispersive (617) d'une longueur donnée différente d'une onde à l'autre;
- un dispositif générateur de retards (911) selon l'une quelconque des revendications 1 à 5 dont l'entrée (A) est reliée à la sortie du multiplexeur (612), produisant en sortie une onde lumineuse retardée;

la longueur d'onde $\lambda_i$ de chacune des sources lumineuses (611) étant déterminée en fonction de la source radioélectrique (621) à laquelle elle est associée de façon obtenir pour chacune des sources, après démodulation de l'onde lumineuse (65, 68) fournie par le dispositif générateur de retards (911), un signal radio électrique égal au signal radioélectrique (628, 629) appliqué à l'entrée de modulation de la source lumineuse affecté d'un retard donné; défini de façon à ce que la combinaison des signaux radioélectriques ainsi obtenus constitue le signal émis ou reçu dans la direction θ du faisceau considéré;

les longueurs respectives des segments de fibre optique dispersive (617) véhiculant les ondes lumineuses (64) produites par les sources lumineuses (611) étant définies de façon à préorienter le faisceau dans une direction de pointage donnée.

**Patentansprüche**

1.  Vorrichtung (911) zur Erzeugung von Verzögerungen, zur Anwendung einer Verzögerung um einen gegebenen, quantifizierten Wert auf eine Lichtwelle (63), wobei der angewandte Verzögerungswert von der Wellenlänge dieser Welle abhängt, wobei die Vorrichtung einen Satz von verzögerungserzeugenden Zellen (912) und von optischen Schaltern (913) beinhaltet, welche angeordnet sind, um eine Reihe von miteinander über optische Schalter verbundenen Zellen zu bilden, wobei die Endzellen der Reihe mit Endschaltern (913a, 913b) verbunden sind, welche die Ein-/Ausgangsports (1 bis 6) der Trägerlichtwelle (63) bilden;
    **dadurch gekennzeichnet, dass** jede verzögerungserzeugende Zelle (912) drei unabhängige Lichtwellenleiter-Segmente beinhaltet, ein dispersives Lichtwellenleiter-Segment (917) mit positivem Dispersionskoeffizienten, ein dispersives Lichtwellenleiter-Segment (916) mit negativem Dispersionskoeffizienten und ein nicht dispersives Lichtwellenleiter-Segment (915), wobei die drei Segmente jeweils gleiche Wellenlängen besitzen, jeder optische Schalter (913), der zwei verzögerungserzeugende Zellen (912) miteinander verbindet, so konfiguriert ist, dass er entsprechend dem auf ihn angewandten Befehl eines der drei Lichtwellenleiter-Segmente, welches eine der betrachteten Zellen (912) bildet, mit dem einem oder dem anderen der drei Lichtwellenleiter-Segmente verbindet, welches die andere Zelle bildet.

2.  Vorrichtung nach Anspruch 1, **dadurch gekennzeichnet, dass** jeder optische Endschalter (913a, 913b) so konfiguriert ist, dass er entsprechend dem auf ihn angewandten Befehl eines der drei Lichtwellenleiter-Segmente (915, 916, 917), welches eine der Endzellen bildet, mit einem der Ein-/Ausgangsports (1 bis 6) der Vorrichtung (911) verbindet.

3.  Vorrichtung nach einem der Ansprüche 1 oder 2, **dadurch gekennzeichnet, dass** die verzögerungserzeugenden Zellen (912) so konfiguriert und angeordnet sind, dass sie kontinuierlich in der Lage sind, die auf die Trägerlichtwelle (63) angewandte Gesamtverzögerung zu variieren.

4.  Vorrichtung nach Anspruch 3, **dadurch gekennzeichnet, dass** die verzögerungserzeugenden Zellen (912) konfiguriert sind, um Verzögerungen zu bilden, deren Werte eine geometrische Progression bilden.

5.  Vorrichtung nach Anspruch 4, **dadurch gekennzeichnet, dass** die geometrische Progression ein Verhältnis 2 besitzt, wobei der auf die Trägerlichtwelle angewandte Verzögerungswert binär codiert wird.

6.  Optisches System mit einer Vorrichtung (911) nach einem der Ansprüche 1 bis 5, in Verbund mit einer Lichtquelle, welche eine Lichtwelle (63) erzeugt, welche eine Vielzahl von Spektralkomponenten besitzt, welche ein Linienspektrum bilden.

7.  Optisches System nach Anspruch 6, **dadurch gekennzeichnet, dass** die Lichtquelle eine Lichtwelle (63) erzeugt, deren Spektrum aus Linien mit regelmäßigen Abständen besteht.

8.  Einstrahliges Sende- und Empfangssystem von Funksignalen zum Senden oder Empfangen entsprechend einem in eine gegebene Richtung θ gerichteten Strahl, **dadurch gekennzeichnet, dass** es Folgendes beinhaltet:

    - eine Antenne (62) mit einer Vielzahl von Funkquellen (621);
    - eine Vielzahl von Lichtquellen (611) in gleicher Anzahl wie die Anzahl der Funkquellen (621), wobei jede der Lichtquellen mit einer Funkquelle assoziiert ist und eine Lichtwelle (64) erzeugt, welche eine Eigenwellenlänge $\lambda i$ besitzt, welche durch ein Funksignal (628, 629) moduliert wird, welches an einem Modulationseingang angelegt wird;
    - einen Lichtwellen-Multiplexer (612), welcher eine Lichtwelle (63) erzeugt, welche die Lichtwellen (64) kombiniert, die von den Lichtquellen (611) erzeugt werden, wobei jede der Lichtwellen (64) direkt an einen Eingang des Multiplexers angelegt wird;

- eine Verzögerungserzeugungsvorrichtung (911) nach einem der Ansprüche 1 bis 5, deren Eingang (2) mit dem Ausgang des Multiplexers (612) verbunden ist;

wobei die Wellenlänge λi einer jeden der Lichtquellen (611) anhand der Funkquelle (621) ermittelt wird, mit welcher sie assoziiert ist, um für jede der Quellen nach Demodulierung der durch die Verzögerungserzeugungsvorrichtung (911) gelieferten Lichtwelle (65, 68) ein Funksignal zu erhalten, welches dem am Modulationseingang der Lichtquelle angelegten Funksignal (628, 629) mit einer zugeordneten gegebenen Verzögerung entspricht; so definiert, dass die Kombination der so erzielten Funksignale das in der Peilrichtung θ des betrachteten Strahls gesendete oder empfangene Signal bildet.

9. Mehrstrahliges Sende- und Empfangssystem von Funksignalen zum Senden oder Empfangen entsprechend einer Vielzahl von in gegebene Richtungen θj gerichteten Strahlen, **dadurch gekennzeichnet, dass** es Folgendes beinhaltet:

- eine Antenne (62) mit einer Vielzahl von Funkquellen (621);
- eine Vielzahl von Lichtquellen (611) in gleicher Anzahl wie die Anzahl der Funkquellen (621), wobei jede der Lichtquellen mit einer Funkquelle assoziiert ist und eine Lichtwelle (64) erzeugt, welche eine Eigenwellenlänge $\lambda_i$ besitzt, welche durch ein Funksignal (628, 629) moduliert wird, welches an einen Modulationseingang angelegt wird;
- einen Lichtwellen-Multiplexer (612), welcher eine Lichtwelle (63) erzeugt, welche die Lichtwellen (64) kombiniert, die von den Lichtquellen (611) erzeugt werden;
- eine Vielzahl von Verzögerungserzeugungsvorrichtungen (911) nach einem der Ansprüche 1 bis 5, wobei die Anzahl der Verzögerungserzeugungsvorrichtungen der Anzahl der zu bildenden Strahlen entspricht, wobei der Eingang (A) einer jeden Verzögerungserzeugungsvorrichtung mit einem Ausgang eines Optokopplers (81) verbunden ist, dessen Eingang mit dem Ausgang des Lichtwellen-Multiplexers (612) verbunden ist;

wobei die Wellenlänge $\lambda_i$ einer jeden der Lichtquellen (611) anhand der Funkquelle (621) ermittelt wird, mit welcher sie assoziiert ist, um für jede der Quellen nach Demodulierung der durch jede Verzögerungserzeugungsvorrichtung (911) gelieferten Lichtwelle (65, 811) eine Vielzahl von Funksignalen zu erhalten, wobei jedes Signal dem am Modulationseingang der Lichtquelle angelegten Funksignal (628, 629) mit einer zugeordneten gegebenen Verzögerung entspricht; wobei dieses so definiert ist, dass die Kombination der so erzielten Funksignale das in einer der Peilrichtungen θ der betrachteten Strahlen gesendete oder empfangene Signal bildet.

10. Einstrahliges Sende- und Empfangssystem von Funksignalen zum Senden oder Empfangen entsprechend einem in eine gegebene Richtung θ gerichteten Strahl, **dadurch gekennzeichnet, dass** es Folgendes beinhaltet:

- eine Antenne (62) mit einer Vielzahl von Funkquellen (621);
- eine Vielzahl von Lichtquellen (611) in gleicher Anzahl wie die Anzahl der Funkquellen (621), wobei jede der Lichtquellen mit einer Funkquelle assoziiert ist und eine Lichtwelle (64) erzeugt, welche eine Eigenwellenlänge $\lambda_i$ besitzt, welche durch ein Funksignal (628, 629) moduliert wird, welches an einen Modulationseingang angelegt wird;
- einen Lichtwellen-Multiplexer (612), welcher eine Lichtwelle (63) erzeugt, welche die Lichtwellen (64) kombiniert, die von den Lichtquellen (611) erzeugt werden, wobei jede der Lichtwellen zu einem Eingang des Multiplexers durch ein nicht dispersives Lichtwellenleiter-Segment (617) einer gegebenen Wellenlänge transportiert wird, die sich von einer Welle zur anderen unterscheidet;
- eine Verzögerungserzeugungsvorrichtung (911) nach einem der Ansprüche 1 bis 5, deren Eingang (A) mit dem Ausgang des Multiplexers (612) verbunden ist, welche eine verzögerte Lichtwelle erzeugt;

wobei die Wellenlänge $\lambda_i$ einer jeden der Lichtquellen (611) anhand der Funkquelle (621) ermittelt wird, mit welcher sie assoziiert ist, um für jede der Quellen nach Demodulierung der durch die Verzögerungserzeugungsvorrichtung (911) gelieferten Lichtwelle (65, 68) ein Funksignal zu erhalten, welches dem am Modulationseingang der Lichtquelle angelegten Funksignal (628, 629) mit einer zugeordneten gegebenen Verzögerung entspricht; so definiert, dass die Kombination der so erzielten Funksignale das in der Richtung θ des betrachteten Strahls gesendete oder empfangene Signal bildet;

wobei die jeweiligen Längen der dispersiven Lichtwellenleiter-Segmente (617), welche Lichtwellen (64) transportieren, die durch die Lichtquellen (611) erzeugt werden, so definiert sind, dass sie den Strahl in eine gegebene Peilrichtung vororientieren.

**Claims**

1. A delay-generating device (911) for applying a delay with a given, quantified value to a light wave (63), the value of the applied delay being a function of the wavelength of this wave, the device comprising a set of delay-generating cells (912) and of optical switches (913) arranged so as to form a train of cells, which are connected to each other by optical switches, the end cells of said train being connected to terminal switches (913a, 913b) forming the input/output ports (1 to 6) of the carrier light wave (63),
**characterised in that** each delay-generating cell (912) comprises three independent segments of optical fibre: one segment of dispersive optical fibre (917) with a positive dispersion coefficient, one segment of dispersive optical fibre (916) with a negative dispersion coefficient and one segment of non-dispersive optical fibre (915), the three segments having identical lengths, each optical switch (913) that connects two delay-generating cells (912) together being configured so that, as a function of the command that is applied thereto, it connects one of the three segments of optical fibre forming one of the considered cells (912) to one or the other of the three segments of optical fibre forming the other cell.

2. The device as claimed in claim 1, **characterised in that** each terminal optical switch (913a, 913b) is configured so that, as a function of the command that is applied thereto, it connects one of the three segments of optical fibre (915, 916, 917) forming one of the end cells to one of the input/output ports (1 to 6) of the device (911).

3. The device as claimed in any one of claims 1 or 2, **characterised in that** the delay-generating cells (912) are configured and arranged so as to be able to continuously vary the total delay applied to the carrier light wave (63).

4. The device as claimed in claim 3, **characterised in that** the delay-generating cells (912) are configured to form delays, the values of which form a geometric progression.

5. The device as claimed in claim 4, **characterised in that** the geometric progression has a common ratio of 2, the value of the delay applied to the carrier light wave undergoing binary coding.

6. An optical system comprising a device (911) as claimed in any one of claims 1 to 5, associated with a light source producing a light wave (63) comprising a plurality of spectral components forming a line spectrum.

7. The optical system as claimed in claim 6, **characterised in that** the light source produces a light wave (63), the spectrum of which is formed by evenly separated lines.

8. A single-beam transceiver system for radio-electric signals, for transmitting or receiving in a beam directed in a given direction $\theta$, **characterised in that** it comprises:

    - an antenna (62) with a plurality of radio-electric sources (621);
    - a plurality of light sources (611) of equal number to the number of radio-electric sources (621), each of the light sources being associated with a radio-electric source and producing a light wave (64) with a natural wavelength $\lambda_i$, modulated by a radio-electric signal (628, 629) applied to a modulation input;
    - a light wave multiplexer (612) producing a light wave (63) combining the light waves (64) produced by said light sources (611), each of the light waves (64) being directly applied to an input of the multiplexer;
    - a delay-generating device (911) as claimed in any one of claims 1 to 5, the input (2) of which is connected to the output of the multiplexer (612);

    the wavelength $\lambda_i$ of each of the light sources (611) being determined as a function of the radio-electric source (621) with which it is associated so as to obtain, for each of the sources, after demodulating the light wave (65, 68) supplied by the delay-generating device (911), a radio-electric signal equal to the radio-electric signal (628, 629) applied to the modulation input of the light source assigned with a given delay, defined so that combining the radio-electric signals thus obtained forms the signal transmitted or received in the pointing direction $\theta$ of the considered beam.

9. A multiple-beam transceiver system for radio-electric signals, for transmitting or receiving in a plurality of beams directed in given directions $\theta_j$, **characterised in that** it comprises:

    - an antenna (62) with a plurality of radio-electric sources (621);
    - a plurality of light sources (611) of equal number to the number of radio-electric sources (621), each of the light sources being associated with a radio-electric source and producing a light wave (64) with a natural wave-

length $\lambda_i$, modulated by a radio-electric signal (628, 629) applied to a modulation input;
- a light wave multiplexer (612) producing a light wave (63) combining the light waves (64) produced by said light sources (611);
- a plurality of delay-generating devices (911) as claimed in any one of claims 1 to 5, the number of delay-generating devices being equal to the number of beams to be formed, the input (A) of each delay-generating device being connected to an output of an optical coupler (81), the input of which is connected to the output of the light wave multiplexer (612);

the wavelength $\lambda_i$ of each of the light sources (611) being determined as a function of the radio-electric source (621) with which it is associated so as to obtain, for each of the sources, after demodulating the light wave (65, 811) supplied by each delay-generating device (911), a plurality of radio-electric signals, each signal being equal to the radio-electric signal (628, 629) applied to the modulation input of the light source assigned with a given delay, defined so that combining the radio-electric signals thus obtained forms the signal transmitted or received in one of the pointing directions $\theta$ of the considered beams.

10. A single-beam transceiver system for radio-electric signals, for transmitting or receiving in a beam directed in a given direction $\theta_j$, **characterised in that** it comprises:

- an antenna (62) with a plurality of radio-electric sources (621);
- a plurality of light sources (611) of equal number to the number of radio-electric sources (621), each of the light sources being associated with a radio-electric source and producing a light wave (64) with a natural wavelength $\lambda_i$, modulated by a radio-electric signal (628, 629) applied to a modulation input;
- a light wave multiplexer (612) producing a light wave (63) combining the light waves (64) produced by said light sources (611), each of the light waves being carried towards an input of the multiplexer by a segment of non-dispersive optical fibre (617) with a given wavelength that differs from one wave to the next;
- a delay-generating device (911) as claimed in any one of claims 1 to 5, the input (A) of which is connected to the output of the multiplexer (612), producing a delayed light wave as output;

the wavelength $\lambda_i$ of each of the light sources (611) being determined as a function of the radio-electric source (621) with which it is associated so as to obtain, for each of the sources, after demodulating the light wave (65, 68) supplied by the delay-generating device (911), a radio-electric signal equal to the radio-electric signal (628, 629) applied to the modulation input of the light source assigned with a given delay; defined so that combining the radio-electric signals thus obtained forms the signal transmitted or received in the direction $\theta$ of the considered beam;
the respective lengths of the segments of dispersive optical fibre (617) carrying the light waves (64) produced by the light sources (611) being defined so as to pre-orient the beam in a given pointing direction.

# Fig. 1

# Fig. 4

Fig. 2

Fig. 3

Fig. 5a

Fig. 5b

Fig. 5c

Fig. 6

7a

7b

Fig. 7

Fig. 8

EP 2 260 540 B1

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2871297

**Littérature non-brevet citée dans la description**

- **DENNIS T. K. TONG ; MING C. WU.** Multiwavelength Optically Controlled Phased-Array Antennas. *IEEE Transactions on Microwave Theory and Techniques,* Janvier 1998, vol. 46 (1